# EUROPÄISCHE PATENTANMELDUNG

(11) **EP 3 575 739 A1**
(43) Veröffentlichungstag der Anmeldung: **04.12.2019**
(21) Anmeldenummer: 19177270.6
(22) Anmeldetag: 29.05.2019
(51) Int. Cl.: G01B 11/12, G01B 11/24

(54) **VERFAHREN SOWIE VORRICHTUNG ZUR ERMITTLUNG EINER BELASTUNG ODER ALTERUNG EINES BAUTEILS**

(30) Priorität: 01.06.2018 DE 102018208689
(71) Anmelder: Eolotec GmbH, 90429 Nürnberg (DE)
(72) Erfinder: LOSERT, Wolfgang, 90453 Nürnberg (DE)
(74) Vertreter: FDST Patentanwälte

(57) **Zusammenfassung**

Das Verfahren und die Vorrichtung dienen zur Ermittlung einer Belastung oder Alterung eines sich in einer Längsrichtung erstreckenden und als Hohlkörper ausgebildeten Bauteils, das eine Umfangsfläche aufweist. Hierbei wird zumindest eine Abstandsmessung zwischen einem Bezugspunkt und der Umfangsfläche oder zu einer zur Umfangsfläche korrelierten Messfläche durchgeführt. Anhand des erfassten Abstandswertes wird insbesondere durch Vergleich mit einem Referenzwert auf eine Ovalisierung des Bauteils geschlossen und hieraus werden Rückschlüsse auf die Belastung oder die Alterung des Bauteils gezogen.

## Beschreibung

Die vorliegende Erfindung betrifft ein Verfahren sowie Vorrichtung zur Ermittlung einer Belastung oder Alterung eines Bauteils, speziell eines Bauteils einer Windkraftanlage.

In vielen Maschinen, Vorrichtungen, Anlagen oder auch Bauwerken kommen längliche, hohle Strukturen bzw. Bauteile als Lastübertragungselemente zum Einsatz. Dabei kann es sich im einfachsten Fall um zylindrische Rohre handeln, d.h. es liegt ein konstanter kreisförmiger Querschnitt über der Länge des Körpers vor.

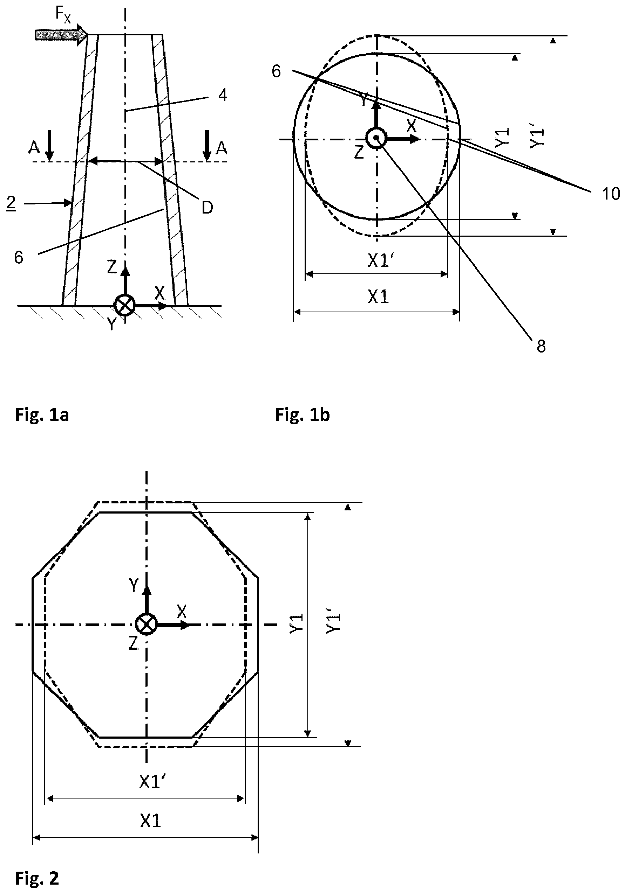

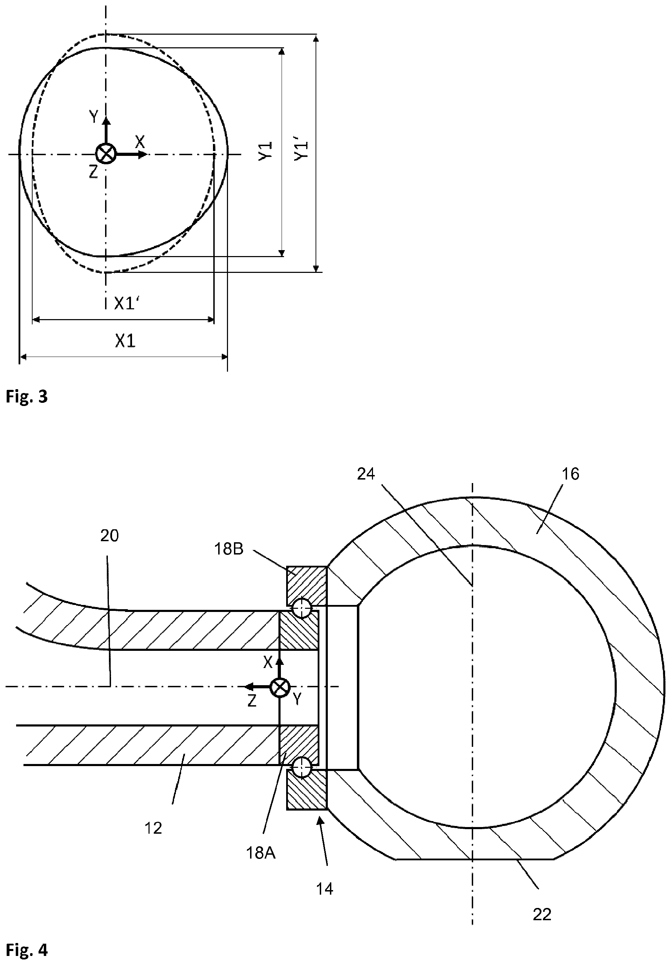

Der Querschnitt kann allerdings auch kreisähnlich ausgeführt sein und über der Länge des Körpers sowohl in der Form als auch in der Größe variieren. Entsprechende Beispiele für derartige Querschnitte sind in den Figuren 2 und 3 gezeigt.

Den hier interessierenden Strukturen bzw. Bauteilen ist gemeinsam, dass deren Länge üblicherweise größer als der Durchmesser ist und die Wandstärke üblicherweise kleiner als ein Viertel des Durchmessers, insbesondere deutlich kleiner als der Durchmesser. Die Bauteile können dabei aus verschiedenen Materialien ausgeführt sein, wie z.B. Metall, Verbundwerkstoffen, Holz oder Beton.

Als einfaches Beispiel können hier Türme aller Art genannt werden. In Figur 1a ist skizzenhaft ein Turm dargestellt, der sich nach oben verjüngt und einen kreisförmigen Querschnitt aufweist.

Derartige Strukturen unterliegen häufig Belastungen, die zu einer Beeinträchtigung der Funktion führen kann.

Der vorliegenden Erfindung liegt die Aufgabe zu Grunde, eine Belastung oder Alterung von derartigen Strukturen, also als Hohlkörper ausgebildete Bauteile, zu erfassen.

Die Aufgabe wird gemäß der Erfindung gelöst durch ein Verfahren mit den Merkmalen des Anspruchs 1 sowie durch eine Vorrichtung mit den Merkmalen des Anspruchs 14. Bevorzugte Weiterbildungen sind in den Unteransprüchen enthalten.

Die Erfindung geht dabei von der Erkenntnis aus, dass derartige Strukturen unter Belastung zu einer ovalisierenden Verformung neigen. Das bedeutet, dass sich üblicherweise ein Abstand X1 in Lastrichtung verringert und sich ein Abstand Y1 senkrecht zur Lastrichtung vergrößert (vgl. hierzu z.B. Fig. 1b). Der Grad der Ovalisierung korreliert dabei mit der Belastungshöhe und ist abhängig von der Steifigkeit der Struktur.

Gleiches kann auch für Systeme gelten, die aus mehreren Bauteilen bestehen, wobei mindestens ein Bauteil über einen gewissen Bereich eine längliche, hohle Struktur aufweist, deren Querschnitt kreisähnlich ausgeführt ist. Ein Beispiel hierfür ist das Blattwurzelsystem einer Windkraftanlage. Hier weist die Blattwurzel des Rotorblattes insbesondere einen kreisförmigen Querschnitt auf. Die kreisförmige Blattwurzel ist über ein Blattlager, dessen Ringe ebenfalls einen kreisförmigen Querschnitt aufweisen, mit einer Rotornabe verbunden (Figur 4). Wird das Rotorblatt mit einer Last beaufschlagt führt dies zu einer ovalisierenden Verformung am Blattlager.

Um die unerwünschte Ovalisierung zumindest zu reduzieren sind in den beschriebenen Strukturen oftmals Versteifungselemente oder Verstrebungen vorgesehen. Dennoch kann die Ovalisierung nicht vollständig eliminiert werden.

Die Erfindung macht sich dieses Verformungsverhalten derartiger Strukturen für die Ermittlung bzw. Überwachung der Belastung oder der Alterung bzw. einer Schädigung des Bauteils zu Nutze. Erfindungsgemäß ist hierzu ein (Mess-) Verfahren mit den Merkmalen das Anspruchs 1 sowie eine (Mess-) Vorrichtung mit den Merkmalen des Anspruchs 14 vorgesehen.

Bevorzugte Weiterbildungen sind in den Unteransprüchen enthalten. Die im Hinblick auf das Verfahren angeführten Vorteile und bevorzugten Ausführungsvarianten sind sinngemäß auch auf die Vorrichtung und umgekehrt zu übertragen.

Insgesamt wird ein Messsystem sowie ein Messverfahren vorgestellt, das über die messtechnische Erfassung der Ovalisierung auf die anliegende Belastung eines Bauteils schließt, welches sich in einer Längsrichtung erstreckt und als Hohlkörper ausgebildet ist.

Sofern vorliegend von Bauteil gesprochen wird, so ist hierunter allgemein eine längliche als Hohlkörper ausgebildete Bauteil-Struktur zu verstehen, welche auch aus mehreren Elementen zusammengesetzt sein kann. Insbesondere handelt es sich bei der Struktur beispielsweise um ein Rotorblatt zusammen mit einem Blattlager. Mittels der Ovalisierungsmessung wird das Rotorblatt und / oder das Blattlager überwacht.

Anhand eines erfassten Abstandswertes von einem Messpunkt zu einer Messfläche, die zu einer Umfangsfläche, insbesondere zu einer Innenoberfläche des zu überprüfenden Bauteils (der zu überprüfenden Struktur) korreliert, wird auf eine Ovalisierung des Bauteils und abgeleitet hiervon auf eine Belastung oder auch Alterung des Bauteils geschlossen. Dies erfolgt insbesondere durch Vergleich des gemessenen Abstandswertes mit einem Referenzwert. Dieser ist beispielsweise hinterlegt oder wird durch einen Algorithmus ermittelt.

Unter einer zur Umfangsfläche korrelierten Messfläche wird verstanden, dass diese einen festen Abstand zu einem definierten Bezugspunkt der Umfangsfläche aufweist. Die Messfläche kann auch eine Teilfläche der Umfangsfläche sein. Bei der Umfangsfläche handelt es sich beispielsweise um eine Außenfläche (Mantelfläche) und vorzugsweise um eine Innenfläche des als Hohlkörper ausgeführten Bauteils.

Gemäß einer Ausführungsvariante wird vorzugsweise auf die aktuell anliegende, also momentane Belastung geschlossen.

Bevorzugt werden im Laufe der Zeit, also zu unterschiedlichen Zeitpunkten Messungen durchgeführt und anhand der zu den unterschiedlichen Zeitpunkten ermittelten Abstandswerte werden Rückschlüsse auf die Alterung des Bauteils, insbesondere auf eine Veränderung der Struktur des Bauteils gezogen.

Bevorzugt werden die Messungen über einen längeren Zeitraum (beispielsweise über einige Wochen, über einige Monate oder auch bis hin zu mehreren Jahren) wiederholt beispielsweise in regelmäßigen, insbesondere periodischen Zeitabständen (Tage, Wochen, Monate) durchgeführt. Dabei werden eine Vielzahl, beispielsweise mehr als 5, mehr als 10, mehr als 50 oder auch mehr Messungen durchgeführt und Abstandswerte erfasst. Die einzelnen Messungen werden dabei bei gleichen, zumindest bei vergleichbaren Belastungsbedingungen durchgeführt. Hierunter wird verstanden, dass das Bauteil bei den Messungen jeweils in einem gleichen oder zumindest vergleichbaren Betriebszustand ist und / oder gleichen oder zumindest vergleichbaren äußeren Belastungen unterworfen ist. Bei einem rotierenden Bauteil ist der Betriebszustand beispielsweise die Drehzahl, ein wirkendes Drehmoment etc. Bei der äußeren Belastung handelt es sich beispielsweise um eine von außen auf das Bauteil einwirkende Kraft, beispielsweise eine Windlast, oder um eine Temperaturbelastung etc.

Insbesondere wird durch das erfindungsgemäße Messsystem, speziell anhand der Vielzahl der Messungen der Ovalisierung eine Veränderung der Steifigkeit der Struktur / des Bauteils (Struktursteifigkeit) erkannt und überwacht. Eine Verringerung der Struktursteifigkeit deutet auf eine Alterung oder auch Materialschädigung hin. Dabei kann es sich beispielsweise um einen Delaminierungsprozess im Fall von Faserverbundwerkstoffen handeln, der zu einer reduzierten Materialsteifigkeit und damit zu einer verstärkten Ovalisierung unter Belastung führt. Aber auch z.B. Risse im Material oder ein Vorspannkraftverlust von Verbindungselementen wie Schrauben können zu einer messbaren Erhöhung der Ovalisierung führen.

In zweckdienlicher Ausgestaltung wird die Ovalisierung bzw. eine Veränderung der Ovalisierung durch Vergleich mit einem Referenzwert für den Abstandswert ermittelt. Bevorzugt wird aus dem Grad der Abweichung von diesem Referenzwert auf den Grad der Belastung oder auf den Grad der Alterung geschlossen. Unter "Grad der Abweichung" wird allgemein die Differenz zwischen dem Abstandswert und dem Referenzwert verstanden. Eine Zunahme dieser Differenz entspricht daher einer Veränderung (Zunahme oder auch Abnahme) des Grads der Abweichung vom Referenzwert. Zur Bestimmung des Grads der Belastung oder der Alterung wird daher insbesondere einer Differenzbetrachtung zwischen gemessenen Abstandswerten und dem zumindest einen Differenzwert vorgenommen. Unter "Grad der Belastung oder Alterung" wird hierbei insbesondere die Abweichung von einem Ursprungs- oder Sollzustand des Bauteils bzw. der zu überprüfenden Eigenschaft (wie beispielsweise Steifigkeit) verstanden. Ein zunehmender Grad der Ovalisierung (zunehmender Grad der Abweichung) deutet auf eine zunehmende Verringerung der Steifigkeit und damit auf einen höheren Grad der Belastung bzw. einen höheren Grad der Alterung hin.

In zweckdienlicher Ausgestaltung ist für die Ermittlung/Bestimmung der Alterung bzw. (momentanen) Belastung eine Korrelation zwischen Abstandswerten und der Belastung/Alterung hinterlegt. Die gemessenen Abstandswerte werden mit diesen hinterlegten Abstandswerten verglichen. Die Korrelation zwischen Abstandswerten und Belastung/Alterung wird beispielsweise durch einen Algorithmus ermittelt, alternativ durch Referenzmessungen oder auch Vergleichsmessungen sowie auch auf Basis von Erfahrungswerten beispielsweise mit vergleichbaren Bauteilen/Anlagen.

Bei einigen Systemen, beispielsweise bei einem Blattlager für ein Rotorblatt einer Windkraftanlage, ist eine jeweilige Richtung einer auftretenden Belastung und damit auch die Richtung, in der eine Ovalisierung des Bauteils unter Belastung stattfindet, bekannt. In einem solchen Fall ist es ausreichend und vorzugsweise auch vorgesehen, dass lediglich eine Messung in eine Messrichtung erfolgt.

Alternativ besteht grundsätzlich die Möglichkeit, die Ovalisierung mittels mehrerer Messungen in mehreren Messrichtungen zu erfassen. Speziell erfolgen beispielsweise zwei Messungen unter einem definierten Winkelabstand der Messrichtungen beispielsweise von 30°, 60°, 90°, 150°.

Zur Abstandsmessung in unterschiedlichen Messrichtungen ist dabei gemäß einer ersten Ausführungsvariante vorgesehen, dass mehrere Sensoren und mehrere Messflächen oder auch eine in unterschiedliche Richtungen abstrahlende Sensoreinheit (optische Sensoreinheit) und mehrere Messflächen ausgebildet sind. Gemäß einer alternativen Ausführungsvariante sind zumindest ein und vorzugsweise genau ein Sensor sowie zumindest eine Messfläche relativ zueinander dreh- oder rotierbar angeordnet, sodass durch eine Relativverdrehung zwischen Sensor und der bzw. den Messflächen unterschiedliche Messrichtungen abgetastet werden. Diese Ausgestaltung bietet sich insbesondere bei rotierenden Bauteilen an. Speziell in diesem Fall wird beispielsweise der Sensor in der Mitte des rotierenden Bauteils angeordnet und misst auf mehrere Messflächen am Innenumfang des Bauteils, beispielsweise während dieses rotiert.

Bei Messungen in mehreren Messrichtungen werden um den (Innen-) Umfang des Bauteils während eines Messvorgangs zu einem momentanen Messzeitpunkt mehrere Abstandsmessungen in unterschiedlichen Messrichtungen durchgeführt, wobei für jede Messrichtung jeweils ein richtungsspezifischer Abstandswert erfasst wird. Auf Basis dieser mehreren richtungsabhängigen Abstandswerten zu einem Messzeitpunkt (Durchführung einer (Ovalisierungs-)Messung) wird die Ovalisierung des Bauteils ermittelt.

In besonders bevorzugter Ausgestaltung erfolgt die Abstandsmessung auf berührungslosem und speziell auf optischem Weg. Hierzu sind eine Lichtquelle sowie ein Lichtsensor vorgesehen. Zur Messung des Abstands zwischen Lichtsensor und Lichtquelle, die jeweils fest zum Bezugspunkt bzw. zur Messfläche korreliert sind, wird dann der Abstand zwischen Bezugspunkt und Messfläche in an sich bekannter Weise durch Auswertung der optischen Signale ermittelt. Speziell wird eine Phasenverschiebung des von der Lichtquelle ausgesendeten optischen Messsignals ausgewertet.

In zweckdienlicher Ausgestaltung handelt es sich bei dem Bauteil um den Teil eines Bauwerks oder auch um einen Teil einer großtechnischen Anlage, insbesondere einer Windkraftanlage. Die Abstandsmessung wird dabei vorzugsweise während des laufenden Betriebs der Anlage durchgeführt. Speziell handelt es sich bei dem Bauteil um ein im Betrieb rotierendes Bauteil speziell einer solchen Anlage. Das Bauteil selbst weist typischerweise einen Durchmesser (freier Innendurchmesser des als Hohlkörper ausgebildeten Bauteils) von größer 0,3m, vorzugsweise von größer 0,5m und weiter vorzugsweise von größer 1 m bis hin beispielsweise zu mehreren Metern, beispielsweise 10 m, 20 m auf. Bei im Betrieb rotierenden Bauteilen liegt der freie Innendurchmesser typischerweise im Bereich größer 0,5m, speziell größer 1m bis hin zu mehreren Meter(z.B. bis 2-5m), bei feststehenden Bauwerken (Türmen) z.B. im Bereich von 5 bis 20m.

Insbesondere handelt es sich dabei bei dem Bauteil um ein Rotorblatt oder um den Turm einer Windkraftanlage. Sofern vorliegend von Windkraftanlagen gesprochen wird, so werden hierunter großtechnische Anlagen verstanden, die eine Turmhöhe von typischerweise mehr als 50 m bis hin zu 180 m oder mehr aufweist. Derartige Türme weisen typischerweise einen sich nach oben hin verjüngenden Durchmesser auf. Im Fußbereich liegt dieser typischerweise bei mehreren Metern. Auch im oberen Bereich des Turmes beträgt der Durchmesser typischerweise noch mehr als 1 m. Am oberen Ende des Turmes ist typischerweise die sogenannte Gondel drehbar befestigt. Innerhalb der Gondel ist üblicherweise ein Generator, gegebenenfalls ein Getriebe angeordnet. Der Generator wird über eine Generatorwelle angetrieben, die mit einer Nabe in Verbindung steht, an der die Rotorblätter befestigt sind.

Bei einer derartigen Anlage sind die Rotorblätter in ihrem Fußbereich, auch Blattwurzel genannt, jeweils über ein Blattlager mit der Nabe verbunden. Im Blattlager ist das Rotorblatt typischerweise über einen gewissen Winkelbereich schwenkbar gelagert. In zweckdienlicher Ausgestaltung erfolgt die hier beschriebene Abstands- und damit Ovalisierungsmessung im Bereich dieses Blattlagers. In diesem Bereich werden daher die auf das Rotorblatt einwirkenden Kräfte, typischerweise eine Überlagerung von Windlasten und Gewichtskräften, übertragen.

Allgemein ist eine derartige Ovalisierungsmessung zur Bestimmung der momentanen Belastung oder auch der Alterung in einem Lagerbereich des zu prüfenden Bauteils vorgesehen. Die Abstandsmessung erfolgt dabei im Bereich und insbesondere innerhalb des Lagers

Bevorzugte Ausgestaltungen ergeben sich insbesondere auch im Zusammenhang mit den Figuren. Diese zeigen jeweils in teilweise stark vereinfachten Darstellungen:
- Fig. 1a, b: einen Längsschnitt durch einen insbesondere als Turm ausgebildeten Hohlkörper sowie einen Querschnitt entlang der Schnittlinie A-A,
- Fig. 2, 3: alternative Querschnittsformen für Hohlkörper wobei jeweils eine unverformte Innenkontur (durchgezogene Linie) sowie eine ovalisierte Innenkontur (gestrichelte Linie) dargestellt ist,
- Fig. 4: eine Querschnittsdarstellung im Bereich eines Blattlagers zur Lagerung eines Rotorblatts einer Windkraftanlage an einer Nabe eines Rotors der Windkraftanlage
- Fig. 5,6: schematische, beispielhafte Darstellungen jeweils eines Messsystems mit Sensor und Messfläche,
- Fig. 7a-e: schematische beispielhafte Darstellungen für unterschiedliche Anordnungen von Sensoren und Messstrecken zur Abstandsmessung sowie
- Fig. 8: eine Blockbilddarstellung einer optischen Messanordnung.

Fig. 1a zeigt beispielhaft und stark vereinfacht ein zu überprüfendes Bauteil 2, welches die zu überprüfende Struktur darstellt. Das Bauteil 2 erstreckt sich in einer Längsrichtung 4, die in den Figuren durch die Z-Richtung angedeutet ist. Das Bauteil 2 ist dabei als ein Hohlkörper ausgebildet. Dieser weist im unbelasteten Zustand beispielsweise einen kreisrunden Querschnitt mit einem Innenabstand, speziell also einem Innendurchmesser D auf. Bei nicht kreisrunden Querschnittsformen wird der Innenabstand durch zwei gegenüberliegende Flächenbereiche einer Innenfläche 6 des hohlen Bauteils 2 verstanden. Der Innenabstand D ist dabei insbesondere bestimmt durch den kürzesten Abstand.

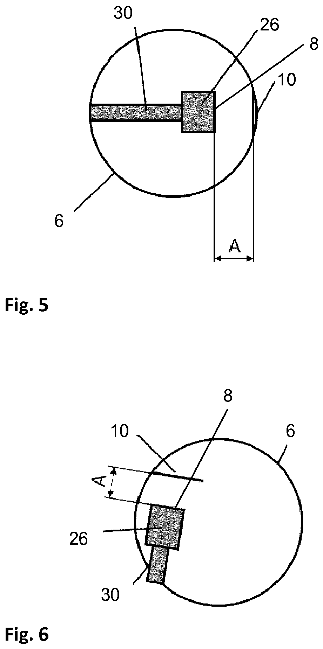

Bei der vorgesehenen Ovalisierungsmessung wird insbesondere dieser Innenabstand bzw. auch der halbe Innenabstand (Radius) erfasst. Hierzu wird allgemein von einem Bezugspunkt 8 auf eine Messfläche 10 gemessen. Der Bezugspunkt 8 sowie die Messfläche 10 (vgl. hierzu insbesondere die Fig. 5 bis 7) weisen jeweils einen festen Abstand zu definierten Flächenbereichen der Innenfläche 6 auf, sodass insgesamt durch eine Variation des Abstands zwischen Bezugspunkt 8 und Messfläche 10 auf eine Abstandsveränderung der jeweiligen Teil-Innenflächen zurückgeschlossen werden kann, zu dem der Bezugspunkt 8 bzw. die Messfläche 10 korreliert sind.

Alternativ zu der Anordnung der Messfläche 10 relativ zur Innenfläche kann diese auch zur Außenfläche fest korreliert sein. Allgemein ist die Messfläche 10 zu einer Oberfläche des Bauteils 2, speziell einer Umfangsfläche korreliert.

Der Bezugspunkt 8 liegt beispielsweise innerhalb des zu überprüfenden Bauteils 2, kann grundsätzlich jedoch auch außerhalb des zu prüfenden Bauteils 2 liegen. So ist beispielsweise auch die Abstandsmessung von einem außerhalb des Bauteils 2 gelegenen Bezugssystems auf die Umfangsfläche (bzw. einer zur äußeren Umfangsfläche korrelierende Messfläche 10) vorgesehen. Eine Ovalisierung macht sich grundsätzlich durch eine Abweichung von der Ausgangskontur, beispielsweise einer kreisrunden Ausgangskontur sowohl innen- als auch außenseitig des als Hohlkörpers ausgeführten Bauteils 2 bemerkbar.

In der Fig. 1b ist beispielhaft eine kreisrunde Querschnittsstruktur (Querschnittsansicht senkrecht zur Längsrichtung 4) dargestellt. Die durchgezogene Linie zeigt dabei die unverformte Kontur und die gestrichelte Linie die ovalisierte Kontur.

In der Fig. 2 ist eine alternative polygonale, speziell oktogonale Querschnittskontur dargestellt, wobei auch hier die unverformte Kontur als durchgezogene Linie und die ovalisierte Kontur als gestrichelte Linie dargestellt ist.

Fig. 3 zeigt eine weitere alternative Querschnittskontur nach Art einer gerundeten Dreieckskontur, speziell eine trilobulare Struktur. Auch hier ist die unverformte Kontur durch eine durchgezogene Linie und die ovalisierte Kontur durch eine gestrichelte Linie dargestellt.

Die Fig. 4 zeigt ausschnittsweise ein Rotorblatt 12 als, welches über ein Blattlager 14 an einer Nabe 16 befestigt ist. Das Rotorblatt 12 bildet beispielsweise das zu überprüfende Bauteil 2 oder ist Teil einer zu prüfenden Bauteil-Struktur, die beispielsweise auch das Blattlager 14 umfasst. Grundsätzlich kann auch das Blattlager 14 das zu überprüfende Bauteil 2 bilden oder Teil der zu prüfenden Bauteil-Struktur sein. Das Blattlager 14 weist zwei Lagerringe 18A,18B, nämlich einen Innenring 18A sowie einen Außenring 18B auf. Das Rotorblatt 12 ist um eine Drehachse 20 rotier- oder schwenkbar. Die Nabe 16 ist mittels eines hier nur angedeuteten Flansches 22 mit einer nicht näher dargestellten Rotorwelle mechanisch fest verbunden. Die Rotorwelle rotiert im Betrieb um eine Rotationsachse 24. Speziell wird die Belastung/Alterung des Rotorblatts 12 durch eine Ovalisierungsmessung ermittelt. Alternativ oder ergänzend wird mit dieser Anordnung auch das Blattlager 14 und / oder dessen Verschraubung mittels der Ovalisierungsmessung überwacht. Die Drehachse 20 definiert zugleich auch die Längsrichtung 4 (Z-Richtung). Zur Messung der Ovalisierung des Rotorblatts 12 wird vorzugsweise eine Abstandsmessung von einem Bezugspunkt 8 im Innern des Blattlagers 14 auf die Innenfläche des Innenrings 18A durchgeführt.

Zur Messung der Ovalisierung des Rotorblatts 12 wird beispielsweise in X- und/oder Y-Richtung, also senkrecht zur Längsrichtung 4/senkrecht zur Drehachse 20 die Abstandsmessung durchgeführt.

Hierzu kann auch der Abstand zwischen den beiden Lagerringen 18A,18B in geeigneter Weise erfasst werden. Beispielsweise ist hierzu an dem einen Lagerring 18A,18B bzw. dem ihm zugeordneten Bauteil (Rotorblatt 12 / Nabe 16) ein insbesondere optischer Sensor und am gegenüberliegenden Lagerring 18B,18A bzw. dem diesen zugeordneten Bauteil 16,12 die Messfläche 10 angeordnet.

Die Fig. 5 bis 7 zeigen in Prinzip-Darstellungen unterschiedliche Anordnungen von einem Sensor 26 zur Messfläche 10, jeweils beispielhaft illustriert anhand einer kreisrunden Kontur (Innenkontur) des Bauteils 2. Beispielsweise handelt es sich bei der kreisrunden Kontur um die Innenseite des Innenlagers 18A. Die vordere Seite des Sensors 26 definiert dabei jeweils den Bezugspunkt 8.

Gemäß der Fig. 5 ist dabei der Sensor 26 über einen Halter 30 an dem Bauteil 2 an der Innenfläche 6 befestigt. Anders als in der stark vereinfachten Figur 5 dargestellt, reicht der Sensor nur geringfügig in den Innenraum hinein. Der Innendurchmesser z.B. eines Blattlagers 14 liegt beispielsweise über 0,5m, insbesondere über 1m und beträgt bis zu mehreren Metern. Die Messfläche 10 ist an der gegenüberliegenden Teilfläche der Innenfläche 6 angeordnet. Es wird mittels dieser Sensoranordnung ein Abstandswert A als Maß für den Abstand zwischen dem Sensor 26 (Bezugspunkt 8) und der Messfläche 10 gemessen. Dieser gemessene Abstandswert A korreliert aufgrund der festen Anordnung des Sensors 26 sowie der Messfläche 10 relativ zu 180° gegenüberliegenden Teilflächen der Innenfläche 6 zu dem Innendurchmesser D bzw. zu dem Abstandsmaß/Innenabstand zwischen diesen beiden 180° gegenüberliegenden Teilflächen der Innenfläche 6. Damit ist der Abstandswert A ein Maß für eine eventuelle Ovalisierung.

Bei der Fig. 6 sind die Messfläche 10 sowie auch der Sensor 26 jeweils entlang einer Linie einer Sekante orientiert. Bei der Fig. 5 waren der Sensor 26 sowie die Messfläche 10 jeweils senkrecht zur Flächennormalen orientiert.

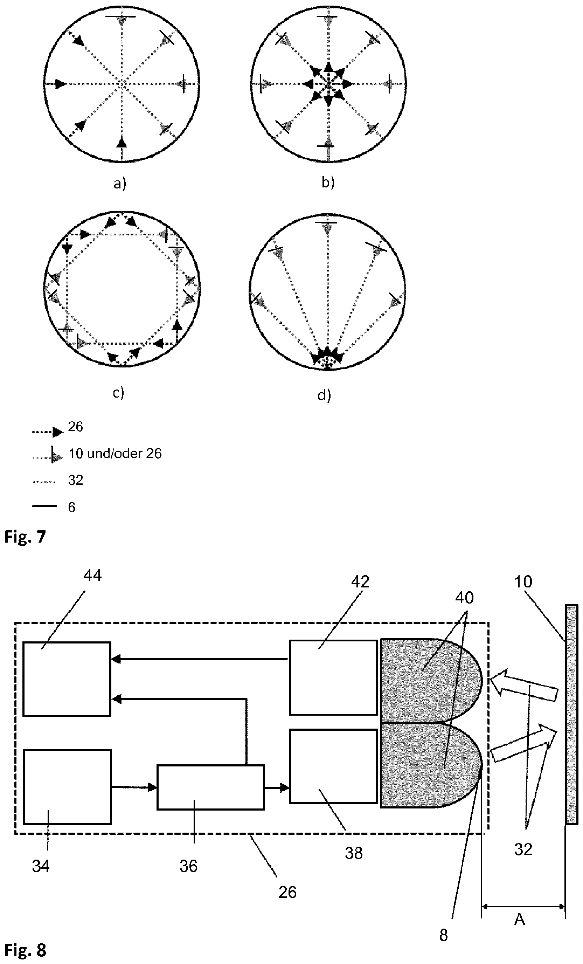

Die Fig. 7 zeigt in den Teilfiguren a) bis d) unterschiedliche Ausgestaltungen mit mehreren Sensoren 26 und jeweils zugeordneten Messflächen 10. Alternativ oder auch ergänzend zu der Anordnung von mehreren Sensoren 26/Messflächen 10 besteht auch die Möglichkeit, den Sensor 26 beispielsweise über einen gewissen Winkelbereich rotierbar anzuordnen.

Bei der Anordnung mit mehreren Sensoren 26/Messflächen 10 werden während eines Messdurchgangs (allgemein während einer Messung) zu einem Messzeitpunkt mehrere Abstandsmessungen in unterschiedlichen Messrichtungen durchgeführt. Bei den Anordnungen gemäß den Fig. 5,6 wird jeweils lediglich eine Messung in einer Messrichtung durchgeführt.

Gemäß Fig. 7a sind die Sensoren 26 in der einen Hälfte und die zugeordneten Messflächen 10 in der gegenüberliegenden anderen Hälfte angeordnet.

Bei der Anordnung gemäß Fig. 7b sind die Sensoren 26 im Inneren, speziell in der Mitte des Bauteils 2 angeordnet und die Messflächen 10 um den Innenumfang an der Innenfläche 6 verteilt angeordnet. Anstelle von mehreren Sensoren 26 kann ein rotierbarer Sensor 26 angeordnet sein, der in mehrere Messrichtungen misst.

Bei der Anordnung gemäß der Fig. 7c sind um den Umfang verteilt, speziell gleich verteilt, abwechselnd und im Ausführungsbeispiel beispielsweise paarweise abwechselnd Sensoren 26 und Messflächen 10 verteilt angeordnet. Die Sensoren 26 messen jeweils von einem Ort der Innenfläche 6 (Bezugspunkt 8) zu einer beispielsweise 90° entfernt liegenden Messfläche 10.

Bei der Ausführungsvariante gemäß der Fig. 7d ist der oder sind die Sensoren 26 an einem Ort an der Innenfläche 6 befestigt und messen in unterschiedlichen Messrichtungen zu jeweils gegenüberliegenden Messflächen 10.

Sofern vorliegend von "Sensor 26" gesprochen wird, so wird hierunter insbesondere eine Sende-Empfangseinheit, speziell eine optische Sende-Empfangseinheit verstanden, die zum einen zum Senden eines optischen Messsignals (Lichtstrahl 32) als auch zum Empfang des reflektierten Lichtstrahls 32 ausgebildet ist. Die Messflächen 10 sind in diesem Fall insbesondere als Reflektoren ausgebildet.

Ein beispielhafter Aufbau einer derartigen Messanordnung ist stark vereinfacht in Fig. 8 dargestellt. Der Sensor 26 ist als ein optischer Sender/Empfänger ausgebildet, welcher einen insbesondere spannungskontrollierten Oszillator 34 sowie einen Splitter 36 zur Aufteilung des erzeugten Signals aufweist. Das erzeugte Signal wird an einen Sender 38 übermittelt, beispielsweise eine LED, welcher einen Lichtstrahl 32 abgibt, welcher durch eine Linse 40 fokussiert werden kann. Weiterhin ist ein Empfänger 42, beispielsweise eine Photodiode, vorgesehen zum Empfang des reflektierten Lichtstrahls 32. Das vom Empfänger 42 erfasste Messsignal wird gemeinsam mit dem vom Splitter 36 aufgeteilten Messsignal an einen Phasenkomparator 44 übermittelt. Dieser oder eine zugeordnete Auswerteeinheit ermittelt einen Phasenunterschied zwischen diesen beiden Signalen und anhand des Phasenunterschieds einen Abstandswert A.

Das Verfahren zur Messung und Auswertung der Ovalisierung wird nachfolgend näher erläutert:
Die Ovalisierung wird bevorzugt am Innendurchmesser D der länglichen, hohlen Struktur (Bauteil 2) gemessen, wobei zumindest der (Abstands-) Sensor 26 vorgesehen ist, der den Abstand zwischen dem Bezugspunkt 8 und der Messfläche 10 misst. Die Messung kann auch am Innendurchmesser D eines angrenzenden Bauteils erfolgen, sofern dieses fest mit der länglichen, hohlen Struktur verbunden ist und dessen Ovalisierung unter Belastung teilt. Auch in diesem Fall korreliert also sowohl der Bezugspunkt 8 als auch die Messfläche 10 zu dem zu prüfenden Bauteil 2.

Bei der Blattlagerung einer Windkraftanlage wird beispielsweise am Innendurchmesser D eines Rotorblatts, eines Blattlagers oder eines Nabenflansches zum Blattlager gemessen.

Im einfachsten Fall ist die Belastungsrichtung (vgl. hierzu z.B. Kraftpfeil Fx in Fig. 1a) und damit die Ovalisierungsrichtung bekannt. In diesem Fall genügt ein einzelner Abstandssensor für das erfindungsgemäße Messsystem. Ein solcher Fall ist in den Figuren 1a, 1b dargestellt. Auf den Turm (Bauteil 2) wirkt eine Kraft Fx in X-Richtung. Dies führt unter Belastung zu einer Verringerung des Abstands X1 beim Querschnitt A-A, die gemessen wird. Alternativ (oder auch ergänzend) wird der Abstand Y1 gemessen. Über die Ovalisierung wird auf die Belastung geschlossen oder die Steifigkeit überwacht. Grundsätzlich kann auch der Abstand zwischen zwei beliebigen Punkten am Umfang gemessen werden. Hier ist allerdings die messbare Abstandsänderung bei Last geringer als in X- oder Y-Richtung.

Die Messung kann sowohl absolut als auch relativ erfolgen. So wird beispielsweise der Wert X1 im unbelasteten Zustand und X1' im belasteten Zustand als absolute Abstandsgröße erfasst. In der Auswertung wird dann vorzugsweise die Abhängigkeit des X-Wertes von der Last bzw. Struktursteifigkeit betrachtet. Oftmals ist es aber vorteilhaft, lediglich die Veränderung des Abstandes zu erfassen (also eine relative Messung durchzuführen), da beim Einbau der Sensoren und aufgrund von Toleranzen unterschiedliche Absolutabstände vorliegen können. Bei der Relativmessung wird also ein Referenzabstand im unbelasteten Zustand oder bei bekannter Belastung erfasst und nur die Veränderung zu diesem Referenzwert gemessen.

In einer Ausführungsvariante wird das Messsystem zur Überwachung der Systemsteifigkeit eingesetzt. Im einfachsten Fall genügt es, die Veränderung der Ovalisierung über einen längeren Zeitraum zu messen. Ein Ansteigen der Ovalisierung deutet auf eine Schädigung der Struktur hin. Soll die Schädigung quantifiziert werden, muss der Zusammenhang zwischen Ovalisierungswert und Schaden vorher z.B. durch eine Berechnung ermittelt werden. Die Auswertung erfolgt dann in einer Auswerteeinheit in der die Korrelation hinterlegt ist. Diese Auswerteeinheit kann auch räumlich von der Sensoreinheit entfernt sein oder das Signal wird von einer Software auf einem entfernten Computer bzw. Server ausgewertet.

Im Fall der Belastungsmessung muss ebenfalls die Korrelation von Abstandswert zu Belastung bekannt sein. Diese wird beispielsweise ermittelt, indem auf die Struktur bekannte Belastungen aufgebracht werden und die korrespondierenden Abstandswerte bzw. deren Veränderung gemessen wird. Alternativ wird die Korrelation berechnet.

Für die Abstandsmessung kann jedes Messprinzip zum Einsatz kommen. Als berührender Abstandssensor ist beispielsweise ein vorgespannter Seilzugsensor geeignet oder eine einfache Messuhr. Bevorzugt erfolgt allgemein eine berührungslose Abstandsmessung. Als berührungslose Abstandssensoren können beispielsweise induktive oder kapazitive Sensoren eingesetzt werden. Diese haben allerdings den Nachteil, dass der maximale Messweg von einigen Millimetern oftmals zu gering ist, da die betrachteten Strukturen Durchmesser von mehreren Metern aufweisen können. Um dennoch derartige Sensoren einsetzen zu können wird entweder zwischen zwei nahe beieinander liegenden Punkten am Umfang gemessen werden (Sekante), was allerdings aufgrund der geringen Abstandsänderungen eine extrem hohe Messgenauigkeit erfordern würde.

Vorzugsweise wird eine mechanische Verlängerung angebracht, an der der Sensor 26 oder die Messfläche 10 sitzt, sodass der Messabstand A verkürzt wird (Figuren 5 und 6).

Insbesondere bei größeren Durchmessern (beispielsweise > 0,5m) ist der Einsatz von optischen Sensoren 26 besonders vorteilhaft und vorgesehen, da diese Abstände von mehreren Metern messen können.

Dazu wird pro Sensor 26 jeweils eine gebündelte Lichtquelle (Lichtstrahl 32) als Sender 38 und der Empfänger 42 benötigt, wobei es sich bei dem Empfänger 42 typischerweise um eine Fotodiode mit einem Verstärker handelt. Sender 26 und Empfänger 42 sind dabei beispielsweise gegenüberliegend an den Enden der zu messenden Strecke positioniert.

Vorteilhafterweise werden jedoch Sender 26 und Empfänger 42 parallel nebeneinander an einem Ende der Messstrecke positioniert und am gegenüberliegenden Ende der Messstrecke wird als Messfläche 10 eine reflektierende Fläche bzw. ein Reflektor, typischerweise in Form eines Spiegels angeordnet. Durch den doppelten Messweg erhöht sich die Messgenauigkeit. Sender 38 und Empfänger 42 bilden den als eine Sensoreinheit ausgestaltenden Sensor 26 aus.

Die optische Abstandsmessung kann in unterschiedliche Messverfahren erfolgen. Beispielsweise kann die Laufzeit eines ausgesendeten Lichtimpulses gemessen werden (time of flight bzw. Signallaufzeit). Eine weitere Methode ist die Triangulationsmessung.

Für die Ovalisierungsmessung ist die Abstandsmessung über Phasendifferenz besonders vorteilhaft, da hier im typischen Abstandsbereich von 0,5m bis mehrere Meter eine sehr gute Messgenauigkeit erzielt werden kann. Eine entsprechende Anordnung ist in Figur 8 gezeigt.

Dazu wird beispielsweise mittels einer mit Sinussignal modulierten Laserdiode als Sender 38 ein Laserstrahl erzeugt, wobei die Frequenz typischerweise im Megahertz-Bereich liegt. Das hochfrequente Sinussignal wird beispielsweise durch den Oszillator 34 erzeugt. Über den elektrischen Splitter 36 wird das Sinussignal aufgeteilt und zwar zum Sender 38 (beispielsweise eine Laserdiode) und zum Phasenkomparator 44. Abhängig vom Messabstand (Abstandswert A) kommt der Lichtstrahl 32 am Empfänger 42(beispielsweise eine Photodiode) mit einer bestimmten Phasenlage an, die durch den Phasenkomparator 44 mit der Phasenlage des Sinussignals vom Splitter 36 verglichen wird. Da die Frequenz des Signals bekannt ist, kann über die Phasendifferenz auf den Messabstand geschlossen werden. Die maximal messbare Abstandsänderung entspricht dabei der Wellenlänge, da sich bei größeren Änderungen die Werte der Phasenverschiebung wiederholen. Da bei der Ovalisierungsmessung in der Regel nicht der absolute Abstand, sondern die Abstandsänderung von Interesse ist, stellt dies kein Problem dar. Mit dem beschriebenen Messverfahren können bei absoluten Abständen von bis zu mehreren Metern Veränderungen des Abstands von wenigen Mikrometern gemessen werden.

Wird ein Lichtstrahl 32, zur Messung verwendet, und der reflektierte Lichtstrahl 32 am Empfänger 42 empfangen, müssen Sender 38, Empfänger 42 und Reflektor (Messfläche 10) exakt zueinander ausgerichtet werden, was in der Anwendung oft schwierig realisierbar ist. Insbesondere bei großen Strukturverformungen kann es zu einer Fehlausrichtung unter Last kommen, sodass der Lichtstrahl 32 den Empfänger 42 verfehlt. Verwendet man die Linse 40 am Sender 38, so kann das Licht kollimiert (parallel) gesendet werden und am Empfänger 42, also an der Fotodiode, dann über eine weitere Linse 40 wieder fokussiert werden. Ein solches System ist deutlich unempfindlicher gegen Fehlausrichtung und erlaubt Messungen über längere Distanzen.

Es ist weiterhin besonders vorteilhaft, als Reflektor einen Retroreflektor zu verwenden. Ein derartiger Reflektor hat den Vorteil, dass er den Lichtstrahl 32 immer im Einfallwinkel zurückwirft. Eine Winkelschiefstellung des Reflektors spielt deshalb keine Rolle.

In vielen Anwendungen wechselt jedoch nicht nur die Höhe der Belastung sondern auch die Lastrichtung. In diesem Fall ist ein Sensor 26 nicht ausreichend, um auf die Ovalisierung und damit auf die Belastung zu schließen. In diesem Fall muss das Messsystem auf mehrere Sensoren 26 erweitert werden, um in mehreren (Mess-) Richtungen messen zu können. In Figur 7 sind einige Beispiele gezeigt, wie die Sensoren 26 angeordnet sein können. Die Messstrecken sind gestrichelt dargestellt. Die Sensoren 26 sind als schwarze Pfeile dargestellt. Bei den grauen, mit einem Querstrich versehenen Pfeilen handelt es sich abhängig von der Sensorart um die Messfläche, einen Reflektor oder einen Empfänger. Selbstverständlich kann die Positionierung von Sensor 26 und Gegenpart beliebig vertauscht, die Anzahl der Sensoren 26 beliebig variiert und Positionierungsarten beliebig kombiniert werden. Die Anordnungen sind analog auch bei kreisähnlichen Querschnitten anwendbar. Durch die Abstandsmessungen in mehrere (Mess-) Richtungen kann die Lage der Ovalisierung und deren Grad gemessen bzw. berechnet werden.

In Figur 7a sind die Sensoren 26 und der Gegenpart so angeordnet, dass die Messstrecken jeweils durch den Mittelpunkt des Querschnitts gehen. Je mehr Sensoren 26 vorgesehen werden, desto größer ist die Genauigkeit.

In Figur 7b sind die Sensoren 26 in der Mitte des Querschnitts angeordnet. Dies hat den Vorteil, dass mehrere Sensoren 26 zu einer Einheit kombiniert werden können und vorzugsweise auch sind. Ein weiterer Vorteil dieser Messmethode ist, dass bei einer rotierenden Struktur die Sensoreinheit im stehenden System angebracht werden kann, was die Energieversorgung deutlich erleichtert.

Diese Variante kann vorteilhaft weiterentwickelt werden, indem nur ein Sensor 26 in der Mitte angebracht wird der relativ zum Bauteil 2 um die Längsachse 4 des Bauteils 2 rotiert, wobei eine zusätzliche Winkelerfassung der Messrichtung vorteilhaft ist.

Im Falle einer optischen Messung rotiert beispielsweise ein Umlenkspiegel und der Sensor 26 steht. Die Innenfläche 6 des Bauteils 2 dient in diesem Fall als Messfläche 10 (Reflektor). Wichtig ist, dass die Rotationsgeschwindigkeit deutlich schneller ist als die Laständerungsgeschwindigkeit. Dadurch kann der Abstand über der Messrichtung erfasst und damit die komplette Form des Bauteils 2 in einem kurzen Zeitintervall gemessen werden. Über eine intelligente Software wird dann der Zeitverlauf der kompletten Strukturverformung ausgewertet. In einer Abwandlung werden auch nur in bestimmten Positionen am Bauteil Messflächen 10oder Reflektoren angebracht, sodass nur in bestimmten Messrichtungen ein Abstandssignal zurückgegeben wird.

Figur 7c zeigt eine Anordnung die vorzugsweise angewendet wird, wenn beispielsweise in der Mitte des Strukturquerschnittes ein Bauelement die Messstrecke versperrt.

In Figur 7d sind die Sensoren 26 so angeordnet, dass sie zu einer Sensoreinheit integriert werden können und vorzugsweise sind.

Das erfindungsgemäße Messsystem wird insbesondere als Zustandsüberwachungssystem an der Blattwurzel bzw. den Blattlagern 14 von Windkraftanlagen eingesetzt. Da es sich bei der Blattwurzel um einen länglichen Hohlkörper handelt und am Rotorblatt 12 hohe Biegemomente angreifen, neigt auch dieses System zur Ovalisierung. Mit dem Messsystem wird beispielsweise eine Beschädigung des Verbundwerkstoffes der Blattwurzel in Form von Rissen oder Delaminierung erkannt, da dies zu einer stärkeren Ovalisierung führt.

In der nachveröffentlichten EP 3 343 030 A1 der Anmelderin wird ein Blattlagerüberwachungssystem vorgestellt, wobei eine Abstandsmessung zwischen den Blattlagerringen vorgesehen ist. Es wird weiterhin die Auswertung der Messsignale beschrieben. Dieses Messprinzip wird vorzugsweise - zumindest weitgehend - auch für die vorliegende Ovalisierungsmessung übertragen, da auch der Ovalisierungsverlauf mit jeder Rotorumdrehung einen sinusförmigen Charakter aufweist. Es wird also hierbei beispielsweise über eine FFT-Analyse der Messsignale auf die Rotordrehzahl und damit auf die Belastungssituation geschlossen. Es werden bevorzugt nur Messungen bei ähnlicher Lastsituation verglichen. Weiterhin erfasst ein entsprechendes Messsystem bevorzugt auch Betriebsparameter der Anlagensteuerung und bezieht diese in die Auswertung der Ovalisierungsmessung mit ein. Der Offenbarungsgehalt dieser EP-Anmeldung wird hiermit in die vorliegende Anmeldung mit einbezogen. Dies betrifft insbesondere das darin beschriebene Prinzip der berührungslosen Abstandsmessung. Speziell werden der Gegenstand der Ansprüche 1, 4-14 sowie die zugehörigen Beschreibungsteile, speziell in den Absätzen 11 bis 51 der EP 3 343 030 A1 hiermit mit einbezogen.

### Bezugszeichenliste

- 2: Bauteil
- 4: Längsrichtung
- 6: Innenfläche
- 8: Bezugspunkt
- 10: Messfläche
- 12: Rotorblatt
- 14: Blattlager
- 16: Nabe
- 18A: Innenring
- 18B: Außenring
- 20: Drehachse
- 22: Flansch
- 24: Rotationsachse
- 26: Sensor
- 30: Halter
- 32: Lichtstrahl
- 34: Oszillator
- 36: Splitter
- 38: Sender
- 40: Linse
- 42: Empfänger
- 44: Phasenkomparator

- A: Abstandswert
- D: Innendurchmesser

## Patentansprüche

1. Verfahren zur Ermittlung einer Belastung oder Alterung eines sich in einer Längsrichtung erstreckenden und als Hohlkörper ausgebildeten Bauteils, das eine Umfangsfläche aufweist, wobei zumindest eine Abstandsmessung zwischen einem Bezugspunkt und der Umfangsfläche oder zu einer zur Umfangsfläche korrelierten Messfläche durchgeführt wird und anhand des erfassten Abstandswertes insbesondere durch Vergleich mit einem Referenzwert auf eine Ovalisierung des Bauteils geschlossen wird und hieraus Rückschlüsse auf die Belastung oder die Alterung des Bauteils gezogen werden.

2. Verfahren nach dem vorhergehenden Anspruch, bei dem anhand des Abstandswertes auf eine momentane Belastung des Bauteils geschlossen wird.

3. Verfahren nach einem der vorhergehenden Ansprüche, bei dem mehrere Messungen zu unterschiedlichen Zeitpunkten durchgeführt werden und anhand der zu den unterschiedlichen Zeitpunkten erfassten Abstandswerte Rückschlüsse auf die Alterung des Bauteils, insbesondere auf eine Veränderung der Struktur des Bauteils gezogen werden.

4. Verfahren nach dem vorhergehenden Anspruch, bei dem anhand der Abstandswerte Veränderungen der Steifigkeit des Bauteils ermittelt werden.

5. Verfahren nach einem der vorhergehenden Ansprüche, bei dem aus dem Grad der Abweichung vom Referenzwert auf den Grad der Belastung oder der Alterung geschlossen wird.

6. Verfahren nach einem der vorhergehenden Ansprüche, bei dem eine Korrelation zwischen Abstandswerten und der Belastung oder der Alterung hinterlegt ist und die gemessenen Abstandswerte hiermit verglichen werden, wobei die Korrelation vorzugsweise durch eine Algorithmus und / oder durch Referenzmessungen vorgegeben bzw. hinterlegt ist.

7. Verfahren nach einem der vorhergehenden Ansprüche, bei dem eine Belastungsrichtung des Bauteils bekannt ist und die Abstandsmessung lediglich in eine Messrichtung erfolgt.

8. Verfahren nach einem der Ansprüche 1 bis 6, bei dem um den Innenumfang des Bauteils während eines Messvorgangs zu einem momentanen Messzeitpunkt mehrere Abstandsmessungen in unterschiedlichen Messrichtungen durchgeführt werden und aus den während des Messvorgangs ermittelten Abstandswerten das Bauteils auf eine Ovalisierung überprüft wird, wobei hierzu gemäß einer ersten Alternative vorzugsweise eine feste Anordnung von mehreren Sensoren und Messflächen und gemäß einer zweiten Alternative eine dreh- oder rotierbare Anordnung zumindest eines Sensors und/oder zumindest einer Messfläche vorgesehen ist.

9. Verfahren nach einem der vorhergehenden Ansprüche, bei dem die Abstandsmessung optisch erfolgt, insbesondere durch Auswertung einer Phasenverschiebung eines optischen Messsignals.

10. Verfahren nach einem der vorhergehenden Ansprüche, bei dem es sich bei dem Bauteil um ein Teil eines Bauwerks oder um ein Teil einer großtechnischen Anlage, insbesondere einer Windkraftanlage handelt und die Abstandsmessung während des laufenden Betriebes der Anlage durchgeführt wird.

11. Verfahren nach einem der vorhergehenden Ansprüche, bei dem es sich bei dem Bauteil um ein Rotorblatt oder um den Turm einer Windkraftanlage handelt.

12. Verfahren nach dem vorhergehenden Anspruch, bei dem das Rotorblatt an einer Blattwurzel über ein Blattlager mit einer Nabe verbunden ist und die Abstandsmessung im Bereich des Blattlagers vorgenommen wird.

13. Verfahren nach einem der vorhergehenden Ansprüche, bei dem das Bauteil, insbesondere das Rotorblatt, über ein Lager dreh- oder schwenkbar gelagert ist und die Abstandsmessung zwischen Lagerbauteilen des Lagers, insbesondere zwischen Lagerringen, erfolgt.

14. Vorrichtung zur Ermittlung einer Belastung oder Alterung eines sich in einer Längsrichtung erstreckenden als Hohlkörper ausgebildeten Bauteils, das eine Umfangsfläche aufweist, wobei eine Messeinrichtung angeordnet ist, mittels der zumindest eine Abstandsmessung zwischen einem Bezugspunkt und der Umfangsfläche oder einer zur Umfangsfläche korrelierten Messfläche durchgeführt wird, wobei weiterhin eine Auswerteeinheit vorgesehen ist, die anhand des erfassten Abstandswertes insbesondere durch Vergleich mit einem Referenzwert auf eine Ovalisierung des Bauteils schließt und hieraus Rückschlüsse auf die Belastung oder die Alterung des Bauteils zieht.

15. Vorrichtung nach dem vorhergehenden Anspruche, bei der es sich bei dem Bauteil um ein Bauteil einer Windkraftanlage, insbesondere ein Rotorblatt handelt und die Messeinrichtung im Inneren des Rotorblatts im Bereich einer Blattwurzel angeordnet ist, an der das Rotorblatt mit einer Nabe verbunden ist.
